# DEMANDE DE BREVET EUROPEEN

(11) **EP 0 899 491 A1**
(43) Date de publication de la demande: **03.03.1999**
(21) Numéro de dépôt: 98402123.8
(22) Date de dépôt: 27.08.1998
(51) Int. Cl.: F16K 1/226

(54) **Vanne papillon à manchette élastique d'étanchéité**

(30) Priorité: 01.09.1997 FR 9710846
(71) Demandeur: GEC ALSTHOM SAPAG, 59280 Armentières (FR)
(72) Inventeur: Serin, Jean, 96120 Ermont (FR)
(74) Mandataire: Gosse, Michel

(57) **Abrégé**

Vanne papillon à manchette élastique d'étanchéité (5), comportant un corps de vanne (1) et un obturateur papillon (2) comprenant un axe de rotation (3), ladite manchette élastique garnissant la surface interne du corps de vanne et comportant, à chaque extrémité, contre chaque face d'extrémité (8, 9) du corps de vanne, une collerette d'extrémité (7), et, dans la partie médiane de la manchette une surépaisseur longitudinale externe constituant un talon d'ancrage (10) logé dans une gorge (11) du corps de vanne (1), ledit talon (10) formant, à chacun des deux passages diamétraux de l'axe de rotation (3) de l'obturateur papillon (2), un épanouissement circulaire (12) logé dans un lamage circulaire (13) du corps de vanne, ladite manchette constituant une unique garniture, en une seule partie, dudit corps de vanne, caractérisée en ce que ladite manchette (5) comporte au moins dans l'une des deux zones constituées d'une part par ledit talon (10), et d'autre part par chaque épanouissement circulaire (12), au moins une portion évidée (15, 18) permettant un déplacement de la matière de la manchette vers cette portion évidée.

## Description

La présente invention concerne une vanne papillon à manchette élastique d'étanchéité, comportant un corps de vanne et un obturateur papillon comprenant un axe de rotation, ladite manchette élastique garnissant la surface interne du corps de vanne et comportant à chaque extrémité, contre chaque face d'extrémité du corps de vanne, une collerette d'extrémité et, dans la partie médiane de la manchette une surépaisseur longitudinale externe constituant un talon d'ancrage logé dans une gorge du corps de vanne, ledit talon formant, à chacun des deux passages diamétraux de l'axe de rotation de l'obturateur papillon, un épanouissement circulaire logé dans un lamage circulaire du corps de vanne, ladite manchette constituant une unique garniture, en une seule partie, dudit corps de vanne.

Dans une telle vanne, lorsque le papillon est fermé, il est dans le plan médian de la manchette et l'étanchéité entre le papillon et la manchette est assurée au niveau de cette surépaisseur qui est une zone de contrainte importante, car le diamètre du papillon est légèrement supérieur à celui du diamètre interne de la manchette de façon à assurer une bonne étanchéité.

Comme la manchette en élastomère est incompressible, il s'ensuit que, lors de la fermeture du papillon, il se produit un léger déplacement de l'élastomère formant une petite ondulation positive en aval du papillon dans le sens de sa rotation. Ceci nécessite un organe de manoeuvre de vanne à couple important. La contrainte est particulièrement importante, dans la zone de la surépaisseur située perpendiculairement à l'axe de rotation du papillon obturateur.

La zone des deux épanouissements circulaires aux passages de l'axe de rotation est également une zone de contrainte importante.

La présente invention a pour but de diminuer le couple nécessaire de manoeuvre de la vanne et donc de permettre l'utilisation d'un actionneur moins puissant et donc moins coûteux.

L'invention a ainsi pour objet une vanne papillon à manchette élastique d'étanchéité telle que définie ci-dessus, caractérisée en ce que ladite manchette comporte au moins dans l'une des deux zones constituées, d'une part par ledit talon, et d'autre part, par chaque épanouissement circulaire, au moins une portion évidée permettant un déplacement de la matière de la manchette vers cette portion évidée.

Selon une réalisation particulière de la présente invention, ladite portion évidée est située dans ledit talon et est constituée par au moins une rainure effectuée à l'arrière du talon et s'étendant longitudinalement le long du talon sur au moins une partie de la longueur du talon entre les deux épanouissements circulaires.

Selon une variante de l'invention, ladite portion évidée est située dans ledit talon dans deux zones du talon diamétralement opposées et situées perpendiculairement à l'axe de rotation de l'obturateur papillon et est constitué en un amoindrissement de la profondeur du talon laissant dans ces zones, un jeu entre le talon et le fond de ladite gorge du corps de vanne.

Selon une autre variante, la portion évidée est constituée dans ces zones par une portion de talon en matière poreuse permettant sa compression.

Selon une autre caractéristique, une dite portion évidée est effectuée dans chaque épanouissement circulaire sous la forme d'une gorge circulaire externe.

On va maintenant donner la description d'un exemple de mise en oeuvre de l'invention en se référant au dessin annexé dans lequel:

La figure 1 montre une vanne papillon selon l'invention en coupe par un plan médian selon I-I de la figure 2.

La figure 2 est une section selon II-II de la figure 1.

La figure 3 montre la manchette élastique seule vue par la gauche de la figure 1.

La figure 4 est une vue équivalente à la figure 2, mais dans le cas connu de l'art antérieur.

La figure 5 est une vue partielle de la zone repérée A sur la figure 1 et montrant une première variante de l'invention.

La figure 6 est une vue similaire à la figure 5 montrant une deuxième variante de l'invention.

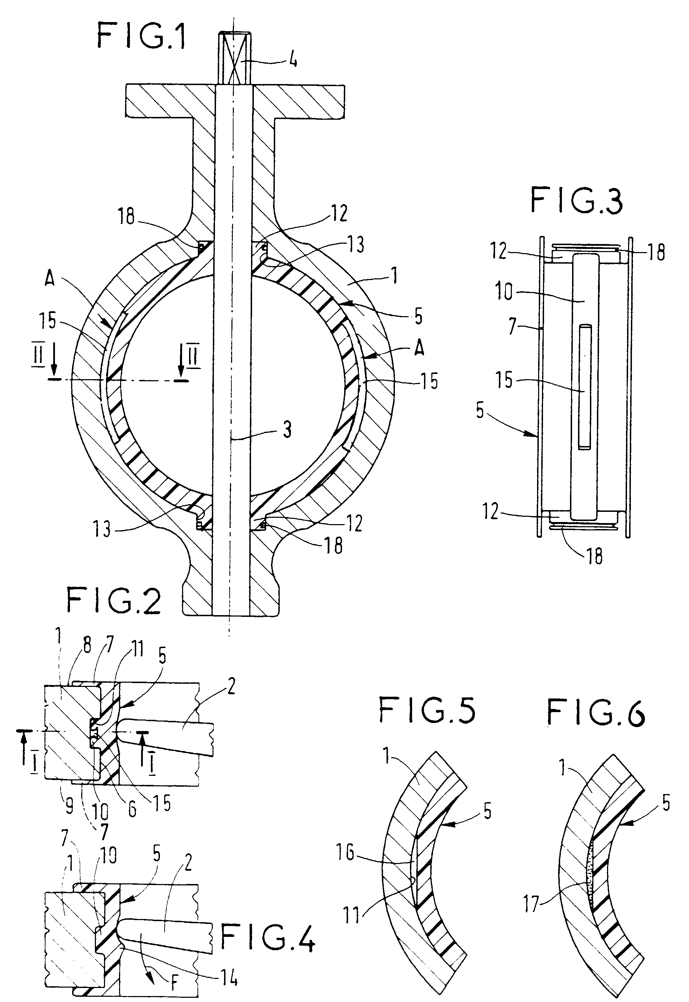

La figure 1 montre ainsi une vanne à obturateur papillon selon l'invention. La vanne comporte un corps métallique 1, par exemple en fonte, et un obturateur papillon 2, non représenté sur la figure 1, mais représenté partiellement figure 2. L'obturateur papillon 2 comprend un axe de rotation 3 avec une extrémité 4 pour son accouplement à un organe de manoeuvre, non représenté : volant ou organe moteur. Le corps de vanne 1 est équipé d'une manchette élastique d'étanchéité 5 en élastomère. Cette manchette 5 est représentée seule figure 3 vue du côté gauche de la figure 1.

La manchette élastique 5 garnit la surface interne 6 (figure 2) du corps 1 et comporte à chaque extrémité latérale une collerette d'extrémité 7 appliquée contre la face d'extrémité 8, respectivement 9 du corps 1. Dans sa partie médiane, la manchette élastique 5 comporte une surépaisseur longitudinale externe 10 qui constitue un talon d'ancrage dans le corps 1. Ce talon est ainsi logé dans une gorge 11 du corps de vanne. Enfin, comme on le voit sur les figures 1 et 3, aux passages diamétraux de l'axe 3 de l'obturateur papillon 2 dans le corps de vanne 1 et dans la manchette 5, le talon 10 forme un épanouissement circulaire 12 logé dans un lamage circulaire 13 du corps de vanne 1. Cette manchette assure l'étanchéité entre l'obturateur papillon 2 et le corps de vanne 1, elle constitue une garniture unique, en une seule partie, dudit corps de vanne.

Avant de décrire la particularité de l'invention, on va montrer, en référence à la figure 4, qui est une vue semblable à celle de la figure 2, mais dans le cas connu de l'art antérieur, quel problème pose cet art antérieur : lors de la manoeuvre de fermeture de la vanne, en faisant pivoter celle-ci dans le sens de la flèche F, il se produit en aval du papillon, dans le sens de sa rotation, une petite ondulation positive 14 qui est un déplacement de matière dû à l'incompressibilité de l'élastomère et au fait que pour obtenir une bonne étanchéité, le diamètre de l'obturateur papillon 2 est légèrement supérieur au diamètre interne de la manchette 5. Comme on le comprend aisément, ce phénomène a pour conséquence de nécessiter un organe de manoeuvre ayant un couple important et d'occasionner une usure de la manchette.

Ce phénomène est particulièrement important dans les deux zones diamétralement opposées et situées perpendiculairement à l'axe 3. Il existe également une autre zone de contrainte qui est celle du passage de l'axe 3, donc au niveau des deux épanouissements circulaires 12 à cause des tolérances de fabrication.

Ainsi, selon l'invention, et en revenant aux figures 1, 2 et 3, on voit que le talon 10 porte à l'arrière une rainure longitudinale 15 s'étendant sur une partie de la longueur du talon entre les deux épanouissements circulaires 12, donc dans les deux zones repérées A sur la figure 1.

Il s'agit en fait de créer au sein du talon, ou entre le talon et la gorge 11 de logement du talon, et principalement dans les zones A, une portion évidée ou une zone compressible de façon à permettre, lors de la fermeture de la vanne, un déplacement de la matière élastomère vers cette zone évidée ou compressible.

Dans l'exemple de ces figures 1, 2 et 3, ceci a été fait au moyen d'une rainure centrale 15 (une de chaque côté), mais on peut effectuer plusieurs rainures parallèles, cela dépend de la largeur du talon 10.

Des essais ont montré que l'on peut réduire ainsi le couple nécessaire à la manoeuvre de l'ordre de 20 % et l'on n'observe aucune usure de la manchette au bout de plus de 10000 cycles de manoeuvre.

Une rainure 15, s'étend par exemple sur environ 80° entre les épanouissements 12. Une rainure étant effectuée de part et d'autre de l'axe 3.

La figure 2 montre qu'il n'y a plus de bossage 14 en aval de l'obturateur papillon 2, mais que au passage du papillon, la matière se comprime vers cette rainure 15.

La figure 5 montre une variante dans laquelle, au lieu d'effectuer une rainure dans le talon 10, celui-ci a une profondeur moindre dans la zone A laissant un certain jeu 16 entre le talon et la gorge 11.

La figure 6 montre une autre variante dans laquelle dans les zones A, le talon est constitué par une matière poreuse 17 et donc compressible.

Les figures 1 et 3 montrent également une mesure similaire au niveau des épanouissements circulaires 12 pour diminuer les contraintes à ce niveau. Il s'agit d'une gorge circulaire externe 18 effectuée dans ces épanouissements circulaires.

## Revendications

1. Vanne papillon à manchette élastique d'étanchéité (5), comportant un corps de vanne (1) et un obturateur papillon (2) comprenant un axe de rotation (3), ladite manchette élastique garnissant la surface interne du corps de vanne et comportant, à chaque extrémité, contre chaque face d'extrémité (8, 9) du corps de vanne, une collerette d'extrémité (7), et, dans la partie médiane de la manchette une surépaisseur longitudinale externe constituant un talon d'ancrage (10) logé dans une gorge (11) du corps de vanne (1), ledit talon (10) formant, à chacun des deux passages diamétraux de l'axe de rotation (3) de l'obturateur papillon (2), un épanouissement circulaire (12) logé dans un lamage circulaire (13) du corps de vanne, ladite manchette constituant une unique garniture, en une seule partie, dudit corps de vanne, caractérisée en ce que ladite manchette (5) comporte au moins dans l'une des deux zones constituées d'une part par ledit talon (10), et d'autre part par chaque épanouissement circulaire (12), au moins une portion évidée (15, 18) permettant un déplacement de la matière de la manchette vers cette portion évidée.

2. Vanne papillon selon la revendication 1, caractérisée en ce que ladite portion évidée est située dans ledit talon (10) et est constituée par au moins une rainure (15) effectuée à l'arrière du talon et s'étendant longitudinalement le long du talon sur au moins une partie de la longueur du talon entre les deux épanouissements circulaires (12).

3. Vanne papillon selon la revendication 1, caractérisée en ce que ladite portion évidée est située dans ledit talon (10) dans deux zones (A) du talon diamétralement opposées et situées perpendiculairement à l'axe de rotation (3) de l'obturateur papillon (2), et est constituée en un amoindrissement de la profondeur du talon laissant dans ces zones (A) un jeu (16) entre le talon et le fond de ladite gorge (11) du corps de vanne (1).

4. Vanne papillon selon la revendication 1, caractérisée en ce que ladite portion évidée est située dans ledit talon dans deux zones (A) du talon diamétralement opposées et situées perpendiculairement à l'axe de rotation (3) de l'obturateur papillon (2), chaque zone (A) de portion évidée étant constituée par une portion de talon en matière poreuse (17) permettant sa compression.

5. Vanne papillon selon l'une des revendications 1 à 4, caractérisée en ce que chaque dit épanouissement circulaire (12) comporte un dit évidement constitué par une gorge circulaire externe (18).
